# EUROPEAN PATENT APPLICATION

(11) **EP 4 458 563 A1**
(43) Date of publication of application: **06.11.2024**
(21) Application number: 23171803.2
(22) Date of filing: 05.05.2023
(51) Int. Cl.: B29C 65/48, B29C 65/52, B29C 65/00, B29C 65/50, B29C 65/70, B29D 99/00, F03D 1/06, B29L 31/08

(54) **INFUSION ASSEMBLY**

(71) Applicant: Siemens Gamesa Renewable Energy A/S, 7330 Brande (DK)
(72) Inventor: Harboe, Niels, 9560 Hadsund (DK)
(74) Representative: SGRE-Association

(57) **Abstract**

The invention describes an infusion assembly (1) for forming a resin-infused joint between two hollow elongate precast sections (21, 22), comprising an outer vacuum arrangement comprising an outer vacuum bag (11) adapted to be attached to the exterior surfaces of the precast sections (21, 22); an inner vacuum arrangement comprising an inner vacuum bag (12) adapted to be attached to the interior surfaces of the precast sections (21, 22); and an overpressure arrangement comprising a pressurized air supply (15) and one or more inflatable bags (14, 141, 142) configured to exert an overpressure (Pₒᵥₑᵣ) against the inner vacuum bag (12) during a resin infusion procedure. The invention further describes a method of connecting precast sections (21, 22) of a wind turbine rotor blade using such an infusion assembly (1).

## Description

### Background

A large component such as a wind turbine rotor blade with a length of 80 m or more can be difficult to transport on account of its length and weight. For example, the rotor blades of a present-day wind turbine can be so long that land transport is essentially not possible, and such rotor blades may therefore be assembled from two or more precast components. Therefore, such a large component can be manufactured in a modular manner, for example by manufacturing two or more sections separately and then later assembling the sections at or near the installation site. A long wind turbine rotor blade can be assembled from two or more precast rotor blade sections, each of which can be manufactured using a suitable mould in a VARTM (vacuum-assisted resin transfer moulding) process.

When joining precast inboard and outboard rotor blade sections, it is important to ensure that the mechanical properties of the resulting assembly correspond to the mechanical properties of an equivalent one-piece assembly, i.e. the performance of a modular wind turbine rotor blade should not be worse than an equivalent one-piece rotor blade manufactured as a single part.

Precast rotor blade sections can be joined mechanically, for example by an arrangement of fasteners extending through bushings formed in the joint region. Such a mechanical joint can add significantly to the mass in the joint region. Furthermore, any metal components of the joint require special consideration in view of lightning protection. It is also known to bond precast elements using a glue joint. However, a glue joint may have insufficient mechanical strength.

It can be preferable to join two precast sections using a resin-infused joint. To this end, the precast sections can be manufactured to include complementary joint features which meet when the rotor blade sections are pushed together; alternatively the precast sections can be shaped to fit on either side of a joint insert. During bonding of the precast elements, the bonding surfaces of the precast elements form a mould for the lay-up to be infused, i.e. these bonding surfaces define an infusion space. The joint is made by setting up a vacuum bag assembly about the interface between the rotor blade sections, and performing vacuum-assisted resin transfer to infuse resin into the infusion space, and through any dry layup material, for example through the material layers of a joint insert between two precast sections. After curing, the resin bond holds the precast rotor blade sections together.

However, the layup of a precast rotor blade section can include various different types of material, any of which may initially comprise some quantity of moisture. This applies also to the joint features at the interface end of a precast section. During VARTM of a precast section, the reduced pressure throughout the layup has the effect of lowering the boiling point of any retained moisture which vaporizes, leaving vacant (air-filled) pores in the material. As a result, the cured precast part may exhibit some degree of porosity within its laminate structure. This unavoidable porosity in the precast laminate material generally does not affect the structural properties of the precast section, but presents a problem when a joint is to be formed between two or more such precast sections in a subsequent VARTM procedure.

This is because the bonding surfaces of a precast section now exhibit surface features in the form of pores, appearing as small openings at the bonding surface. Problematic features are tunnel-like pores extending from the bonding surface into the body of the precast section. Blind tunnel pores may end some distance into the laminate, while open-ended tunnel pores can terminate at a surface some distance beyond the joint. As a result, air can enter the infusion space through such a tunnel pore, making it difficult or even impossible to establish and maintain the required low vacuum pressure for the subsequent VARTM procedure in which the precast section is to form part of a joint.

It is therefore an object of the invention to provide an improved way of connecting precast rotor blade sections.

This object is achieved by the claimed infusion assembly and by the claimed method of connecting two hollow elongate precast sections.

### Description

According to the invention, the infusion assembly can be used during the formation of a resin-infused joint between two hollow elongate precast sections, for example an inboard precast section and an outboard precast section of a wind turbine rotor blade. The inventive infusion assembly comprises an outer vacuum arrangement with an outer vacuum bag which is to be attached to the exterior surfaces of the precast sections on either side of the intended joint; an inner vacuum arrangement with an inner vacuum bag which is to be attached to the interior surfaces of the precast sections on either side of the intended joint; and an overpressure arrangement comprising a pressurized air supply and one or more inflatable bags arranged to exert an evenly distributed overpressure against the inner vacuum bag when the inflatable bag(s) are filled to a predetermined overpressure.

An advantage of the inventive infusion assembly is that the inflatable bags, when inflated beyond ambient pressure, will exert a mild force against the inner vacuum bag. While resin is being infused into the infusion space under vacuum, the slight overpressure is sufficient to ensure that resin is forced into any pore in a bonding surface, in particular resin will be forced at least some distance into any tunnel pore, closing off the pore and thereby effectively blocking the passage of air from the exterior into the infusion space.

The inventive infusion assembly therefore does away with the problems associated with air leakage through tunnel-like porosities during the infusion process, as described in the introduction. Instead, with the inventive approach, any such porosities become entirely advantageous since - when filled with resin - they make a valuable contribution to the mechanical strength of the joint.

According to the invention, the method of connecting two hollow elongate precast sections comprises the steps of aligning the precast sections to meet at a joint; and providing an embodiment of the inventive infusion assembly. The method comprises subsequent steps of attaching the outer vacuum bag to the exterior surfaces of the precast sections on either side of the intended joint; attaching the inner vacuum bag to the interior surfaces of the precast sections on either side of the intended joint; establishing a vacuum in the infusion space defined by the vacuum bags; and deploying the overpressure arrangement to exert an overpressure against the inner vacuum bag, while infusing resin into the infusion space.

Particularly advantageous embodiments and features of the invention are given by the dependent claims, as revealed in the following description. Features of different claim categories may be combined as appropriate to give further embodiments not described herein.

Although the inner vacuum arrangement comprises several sheets of thin polymer material, secured to the interior surfaces of the joint region with butyl seals along their long edges, these sheets are conventionally referred to as "bags". In the following, the sheets of the inner vacuum arrangement can be referred to as bags, layers or foils.

Instead of dealing with air leaking from tunnel pores into the infusion space while trying to establish and maintain a vacuum prior to and during resin infusion, the inventive method - by applying overpressure against the sheets of the inner vacuum arrangement - provides a way of performing resin infusion that is unaffected by such incoming air leaks. The inventive method may therefore be referred to in the following as a "vacuum-assisted and pressurized resin transfer moulding" (VAPRTM) process.

In the following, it may be assumed that the precast sections are sections of a modular wind turbine rotor blade. In the case of a two-piece modular rotor blade, these comprise an inboard precast section with the root end, a transition region and part of the airfoil, while the outboard precast section comprises the remainder of the airfoil and terminates at the tip. Of course, a modular wind turbine rotor blade can be assembled from three or more such precast sections, and any two adjacent sections can be joined using the inventive infusion assembly.

The outer vacuum arrangement preferably comprises an outer fixture or "mould sleeve" which extends about the precast sections and encloses the outer vacuum bag (i.e. the fixture is wider than the outer vacuum bag), and which is configured to hold the precast sections in their intended configuration until joint formation is complete. The outer fixture is constructed to withstand the pressure exerted on the precast sections from within - i.e. the pressure exerted by the inflated pressure bags when these are filled with air above ambient or atmospheric pressure - so that the precast sections retain their form throughout the VARTM procedure. The outer fixture may therefore be regarded as an outer mould for the resin-infused joint, while the inflated pressure bags may be regarded as an inner mould for the resin-infused joint.

The inner vacuum arrangement may comprise several layers in addition to the inner vacuum bag, as well as one or more resin inlet ports, one or more evacuation ports and one or more spill suction ports. For example, the inner vacuum arrangement can comprise the inner vacuum bag, one or more safety bags with spill suction means, a passive bag without spill suction means, etc. Any vacuum bag, safety bag, passive bag etc., is firmly secured to the inner surface of a precast section by a suitable seal such as a butyl seal. In the following, without restricting the invention in any way, a seal between a bag and the surface of a precast section may be assumed to be a butyl seal although, as the skilled person is aware, there may be other means of forming such a seal.

The overpressure arrangement can comprise any number of pressure bags, and the appropriate number may be determined by the geometry of the precast sections. For example, rotor blade precast sections may include a shear web extending in the spanwise direction. In a preferred embodiment of the invention, therefore, the overpressure arrangement comprises a first inflatable bag for placement on one side of a shear web extending through the precast sections, and a second inflatable bag for placement on the other side of the shear web. Since the inflatable bags exert pressure on the inner vacuum assembly, the expressions "inflatable bag" and "pressure bag" may be used interchangeably herein.

A pressure bag can be any suitable inflatable component, for example a balloon, a bladder, a hose, etc. In a particularly preferred embodiment of the invention, a pressure bag is made from a length of layflat tubing. Layflat tubing can be provided as a roll of tubing in the desired width, and can be made from polypropylene, polyamide, polythene or any other suitable material or combination of materials. The length of a cut section is chosen so that the inflated pressure bag preferably extends, by a generous margin, beyond the edges of the widest bag of the inner vacuum arrangement. For example, for a 100 m rotor blade, the pressure bags may be formed from 630 cm wide layflat tubing; the widest bag of the inner vacuum arrangement may have a span-wise extent of 12 m, so that the layflat tubing is preferably cut to a length of 20 m or more, including sufficient length to form a seal at each end to form a closed, inflatable bag.

During consolidation and curing of the joint, it can be beneficial to provide physical support to the insert and the inner vacuum arrangement. This can be done by providing one or more mandrels shaped to match the interior of the rotor blade in the joint region. Therefore, in a further preferred embodiment of the invention, any such mandrel is arranged inside an inflatable bag of the infusion assembly. If a shear web is to extend through the joint region, the infusion assembly can deploy two mandrels, with a leading-edge mandrel arranged in one pressure bag for placement on one side of the shear web, and a trailing-edge mandrel arranged in another pressure bag for placement on the other side of the shear web.

The inventive method preferably comprises a preparatory step of forming an airtight seal at each end of the cut length of layflat tubing. The airtight seal may be formed in any suitable manner, as long as the seal is capable of preventing air from escaping when the bag is inflated. In a preferred embodiment of the invention, a seal is formed as a cold-shrink seal. For example, at one end of the tubing piece, the outer edge is bundled and the bundle is pushed into a cold-shrink tube. This is then shrunk according to the manufacturer's instructions, for example by pulling a very stiff plastic spiral from inside a pre-tensioned tube, allowing for the retraction of a rubber shrink tube until the bundle is airtight.

Preferably, the airtight seal at the rear end or "outboard" end of the inflatable bag is formed to face into the bag interior, i.e. the airtight seal can be formed from within the bag, since access to the outboard end of the arrangement is generally only possible from the inboard end of the rotor blade assembly. This allows a technician to form the seal after arranging the layflat tubing piece in the interior of the precast assembly.

An airtight seal can be formed about a hose, for example an air inlet hose and/or a spill suction hose. An air inlet hose is required at the front end or "inboard" end of an inflatable bag, while a spill suction hose can pass through the seals at both ends, allowing a spill suction hose to extend through the bag from the interior of the outboard precast section to the interior of the inboard precast section. A pressurized air supply is connected to the air inlet hoses to inflate the pressure bags.

The material from which a pressure bag is made may exhibit a degree of elasticity, so that inflation to overpressure can only be achieved by inflating the bag to its expansion limit. In the inventive infusion assembly, an overpressure is desired as soon as the pressure bags are inflated to fill the space in the interior of the joint region. Therefore, in one approach, the expansion limit of an inflatable bag (determined by its material composition and its initial dimensions) is tailored to the volume to be filled in the joint region. This can be achieved by using a bag made of a very thick and possibly also reinforced material.

In a preferred embodiment of the invention, any further expansion of a pressure bag (after inflation to fill the space in the joint region) is instead prevented by a suitable expansion containment means, allowing the initial dimensions of a pressure bag to be chosen with more freedom. The expansion containment means can be a mesh sleeve, industrial netting etc., closed off at both ends to limit the lengthwise (i.e. spanwise) expansion of the inflatable bag. For example, prior to forming airtight seals at each end to complete an inflatable bag, a mesh sleeve is placed about the piece of layflat tubing. The length of the mesh sleeve is chosen to define the limit of spanwise expansion of the pressure bag, thus preventing the elastic material of the pressure bag from being overinflated. To this end, the mesh sleeve can be closed at both ends in any suitable manner.

An exemplary sequence of steps can be as follows: two precast rotor blade sections are pushed together on either side of a joint insert; an outer vacuum bag is attached to the exterior surfaces on either side of the joint; an outer fixture or outer mould shell is put into place to hold the precast sections and joint insert in this configuration; the inner vacuum bag and any further safety bag(s) are attached to the interior surfaces on either side of the joint; layflat tubing lengths are cut from a roll; mandrels are placed inside the cut lengths; mesh sleeves are placed about the cut lengths; these assemblies are placed on either side of a shear web in the joint region; hoses are arranged as desired; airtight seals are formed at each end of each inflatable bag and the open ends of the mesh sleeves are tied off to define the spanwise lengths of the inflated pressure bags. The infusion assembly is now ready to assist a VARTM procedure. This can be performed as follows: a vacuum is established in the infusion space defined by the inner and outer vacuum bags; resin is infused into the infusion space through one or more resin inlet ports; the pressure bags are inflated to a slight overpressure (e.g. 100 mbar above ambient pressure) to exert pressure against the inner vacuum bag during the resin infusion step, and to compel resin to fill any tunnel pores in the precast sections; resin spill is evacuated through one or more spill suction hoses.

Arranging a spill suction hose through the interior of a pressure bag (instead of arranging it between the pressure bag and the inner vacuum assembly) ensures that pressure is evenly exerted by the pressure bag against the inner vacuum assembly, and also ensures that the hose will not leave an imprint along the inner surface of the cured joint. A spill suction hose could be arranged to lie along a vertical face of the shear web prior to inflating the pressure bags, if it can be placed without leaving an imprint in the cured joint.

After infusing the resin evenly throughout the infusion space, the resin is cured in a subsequent curing step. This can be assisted by the application of heat. For example, the outer fixture can include a heating element to heat the infusion space from outside. However, most of the resin-infused material is located towards the interior of the rotor blade. Therefore, in a further preferred embodiment of the invention, the inner vacuum arrangement and/or the overpressure arrangement includes a heating means to heat the infusion space from within the rotor blade. For example, any bag of the inner vacuum arrangement can be manufactured to include thin heating elements or wires which can be connected to a voltage supply. Alternatively or in addition, the overpressure arrangement can be configured to heat the air inside the inflated pressure bags. For example, the overpressure arrangement can augment the pressurized air supply with a blower and an electrical heater arranged so that, once a pressure bag has been inflated to press against the inner vacuum bag to assist in consolidation of the composite layers in the joint, heated air can be circulated in the inflated pressure bag to assist in the curing stage by heating the joint area from within the rotor blade.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exploded view of a modular wind turbine rotor blade;
Figure 2 shows a cross-section at an interface between precast sections of a modular wind turbine rotor blade;
Figure 3 shows a cross-section through a joint between precast rotor blade sections;
Figure 4 shows an embodiment of the inventive infusion assembly in cross-section;
Figure 5 illustrates an effect of the inventive infusion assembly;
Figures 6 - 10 illustrate formation of an inflatable bag for an embodiment of the inventive infusion assembly;
Figure 11 shows elements of the inventive infusion assembly in the interior of the precast sections;
Figure 12 illustrates a cured joint between two precast rotor blade sections.

In the diagrams, like numbers refer to like objects throughout. Objects in the diagrams are not necessarily drawn to scale.

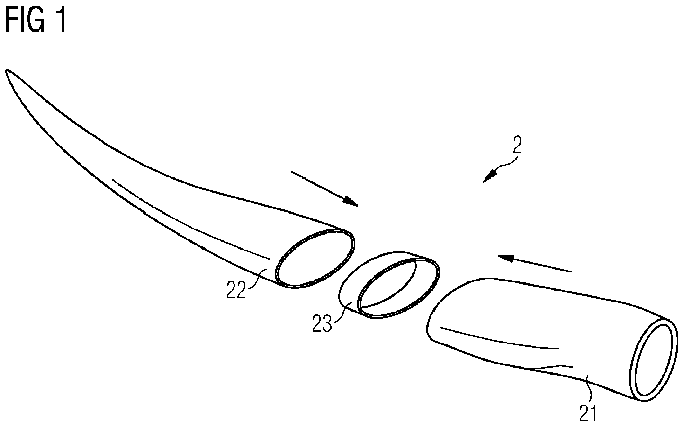

Figure 1 shows an exploded view of a modular wind turbine rotor blade 2. Here, the modular rotor blade comprises a precast inboard section 21 and a precast outboard section 22, and an insert 23 which is bonded by resin infusion to the precast sections 21, 22 to form part of the joint between the two precast sections.

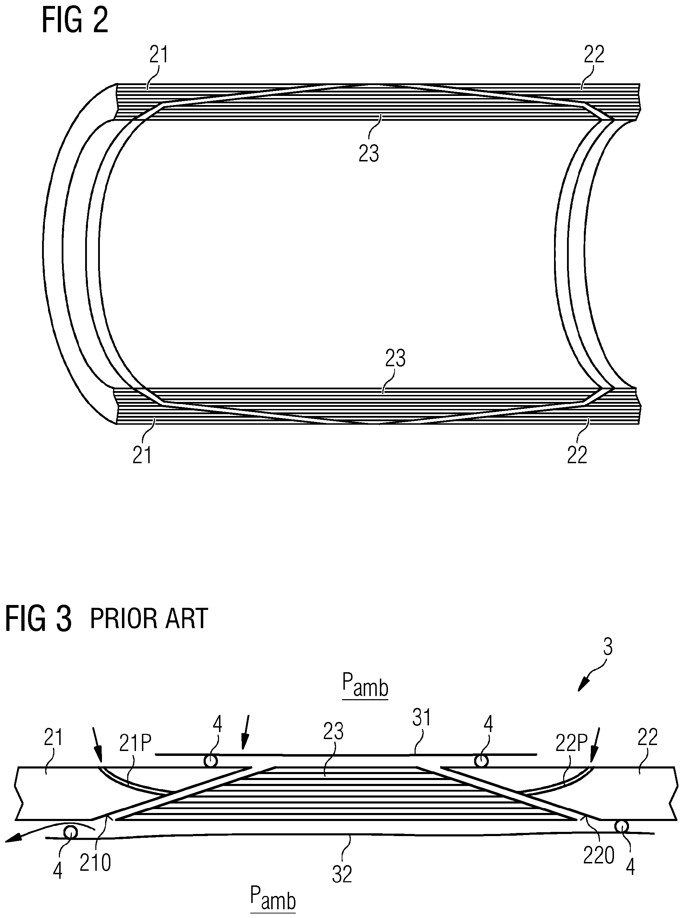

Figure 2 shows a cross-section at an interface between rotor blade sections 21, 22 of a modular wind turbine rotor blade, for example the rotor blade 2 of Figure 1, prior to the step of joining the sections 21, 22. Here, the "open end" of each section 21, 22 is tapered. The outer ends of the insert 23 are also tapered to match the shapes of the tapered open ends of the precast sections 21, 22. The insert 23 comprises layers of dry layup material.

Figure 3 shows a cross-section through the joint of Figure 2, at some stage during a VARTM procedure in a prior art method of joining the rotor blade sections 21, 22. The drawing shows the outer vacuum bag 31 of an infusion assembly, taped to the outer surfaces of the sections 21, 22 by means of a seal such as butyl tape 4. The drawing shows the inner vacuum bag 32 taped to the inside surfaces of the rotor blade sections 21, 22. The inner vacuum bag 32 can be placed about a supporting structure such as a mandrel. In a first step of a conventional VARTM procedure, an underpressure is established in the infusion space defined by the vacuum bags 31, 32 and their butyl seals 4, and resin is infused throughout the material layers of the insert 23. As explained above, a problem arises if the laminate of the precast element is not diffusion-tight because of tunnel pores 21P, 22P extending from the bonding surfaces to the exterior. Two exemplary pores are shown but generally there may be many such pores extending between one opening at a bonding surface 210, 220 and another opening outside of the bagged joint area (as defined by the butyl seals 4). Such pores may be very small, possibly even microscopically small, and the exemplary tunnel pores are shown greatly exaggerated in the drawing. These tunnel pores allow air to be drawn into the infusion space as indicated by the arrows. This continually inward-leaking air makes it difficult or even impossible to achieve and maintain the required low pressure throughout the resin infusion step. This detracts significantly from the quality of the resin infusion step, and the mechanical properties of the joint may be compromised. However, as explained above, it is critical for a wind turbine rotor blade to be able to withstand very high loads during operation, and the joint between rotor blade sections must reliably meet these requirements. Any defect in the resin bond between rotor blade sections can lead to serious or even catastrophic damage during the rotor blade lifetime.

The invention overcomes these problems by ensuring that vacuum bag seals are not broken by residual air during the resin infusion stage, as explained in the following drawings:

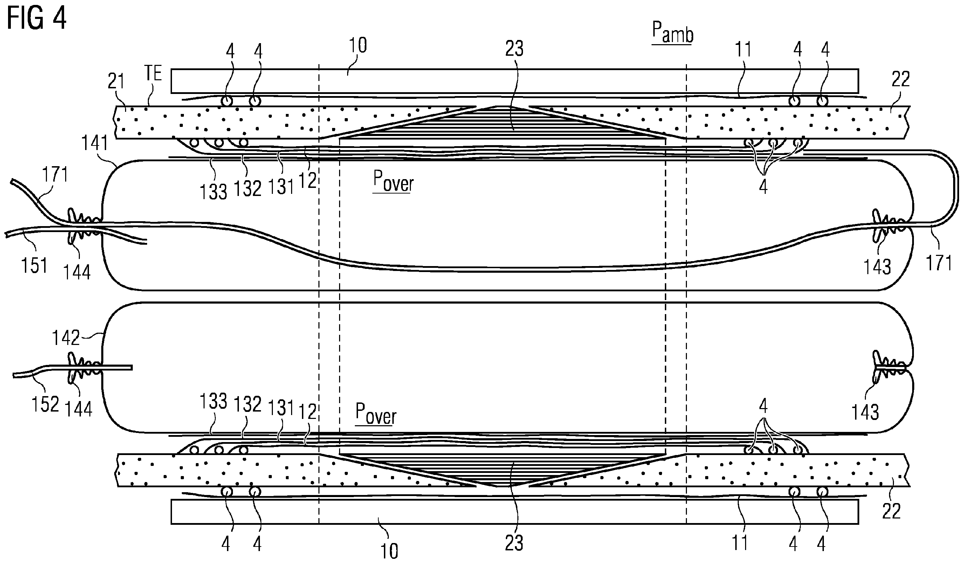

Figure 4 shows a plan view of an embodiment of the inventive infusion assembly in cross-section. The diagram shows rotor blade sections 21, 22 and an insert 23 as described in Figure 1 above.

In this exemplary embodiment, the outer ends of the insert 23 are tapered to match the shapes of the tapered open ends of the sections 21, 22 as described above, but it shall be understood that complementary surfaces of these parts 21, 22, 23 can have any suitable shape. The insert 23 comprises layers of dry layup material as explained above. During the inventive VAPRTM procedure, this insert 23 will be infused with resin to bond all parts 21, 22, 23 together. The shapes of these parts 21, 22, 23 and the material composition of the dry layup 23 are chosen on the basis of the desired mechanical properties at the resulting joint. While the rotor blade assembly can be held in any suitable orientation during resin infusion, in the following it may be assumed that the rotor blade is held such that its chord plane is essentially horizontal. A shear web 24 extends essentially vertically between the suction side and pressure side of the rotor blade assembly.

The diagram also shows an outer fixture 10, realized for example as a rigid sleeve extending about the joint region of the assembled rotor blade. This outer fixture 10 serves to hold the two precast sections 21, 22 together until the joint is cured. An outer vacuum bag 11 is attached to the outer surfaces, for example by means of one or more butyl seals 4 as shown here. Alternatively, the vacuum bag 11 can be secured by means of a built-in cavity between one or more flexible rubber profiles for sealing against the ambient pressure.

In the interior of the rotor blade, an inner vacuum bag 12 is attached to the inner surfaces, for example by means of a butyl seal 4. During the VARTM procedure, as the skilled person will be aware, a vacuum pump extracts air from the cavity defined by the inner and outer vacuum bags 11, 12 to establish a vacuum, and resin is infused through a resin inlet port. For clarity, these components (vacuum pump, resin supply, inlet and outlet ports etc.) are not shown in the diagram.

Instead of relying on the butyl seals and ambient pressure to maintain the vacuum between the inner and outer vacuum bags 11, 12 during resin infusion, the inventive approach is to establish a slight overpressure Pₒᵥₑᵣ against the inner vacuum bag 12. In this exemplary embodiment, the inventive infusion assembly 1 deploys a pair of pressure bags 141, 142, one on either side of a shear web 24 extending lengthwise through the rotor blade interior. A first pressure bag 141 is arranged between the leading edge LE and the web 24, and a second pressure bag 142 is arranged between the web 24 and the trailing edge TE. In this exemplary embodiment, a pressure bag 141, 142 is formed from a length of lay-flat bag, cut to size and then closed at each end to form seals 143, 144. Although not shown in the diagram, a supportive mandrel may be arranged inside each pressure bag 141, 142.

In preparation for the resin infusion step, the pressure bags 141, 142 are inflated to a slight overpressure, for example 50 - 650 mbar above ambient pressure. Inflation of the pressure bags 141, 142 to the desired overpressure can be done after initiating the steps to establish a vacuum or underpressure between the inner and outer vacuum bags 11, 12 and before the resin infusion step commences.

The outer vacuum bag 11 is held in place by the outer fixture 10, and the inflated pressure bags 141, 142 ensure that the inner vacuum bag 12 is also held in place. The slight overpressure acting on both sides of each butyl seal 4 ensures that the seals 4 are not compromised.

The low pressure within the infusion space and the elevated temperatures during VARTM, together with the higher pressure of the inflated pressure bags, have the combined effect of forcing air out of any tunnel pores (i.e. in a direction away from the bonding surfaces), allowing resin to infuse into these spaces. The resin effectively closes off these pores.

The inventive infusion assembly 1 therefore does away with the problems associated with air leaks from porosities in the precast sections 21, 22. Instead, any such porosities become entirely advantageous since - when filled with resin - they make a valuable contribution to the mechanical strength of the joint. The inventive VAPRTM method is essentially unaffected by air leaking into the infusion space through tunnel pores in the precast sections.

During the inventive VAPRTM procedure described above, there may be an increased likelihood of spilling liquid resin.

However, this is a relatively trivial problem and is greatly outweighed by the benefits of preventing the intrusion of air into the infusion space and ensuring high laminate quality at the joint between precast rotor blade sections.

Even so, it is generally desirable to minimize resin spills during a VARTM procedure. With this in mind, the inventive infusion assembly 1 can be equipped with additional measures. The diagram shows a first safety bag 131 attached to the inner surfaces to completely enclose the inner vacuum bag 12. A spill suction hose 171 or sieve hose can be arranged between layers 12, 131, 132, extending about the circumference of the interior cavity and connected to a spill suction pump.

For additional protection, a second safety bag 132 can be attached to the inner surfaces to completely enclose the first safety bag 131. A passive stop layer 133, i.e. a further layer without any suction means, can be arranged to extend beyond the outer edges of the second safety bag 132, enclosing all preceding layers 132, 131, 12. Such a passive stop layer 133 effectively separates the pressurized region from the vacuum region.

Such a combination of multiple bags 131, 132, 133 (e.g. layers or sheets of thin polymer material) with active suction in between acts as a single completely airtight and thick membrane that ultimately inhibits diffusion of air through pores in the precast elements into the infusion space.

Any resin not collected by the spill suction hoses will collect at the lowest point, i.e. underneath the pressure bags 141, 142 and in the spaces between the layers 12, 131, 132, 133. A further spill suction hose can be arranged to evacuate this resin. A foam labyrinth can be placed to ensure that resin does not escape into the rotor blade interior.

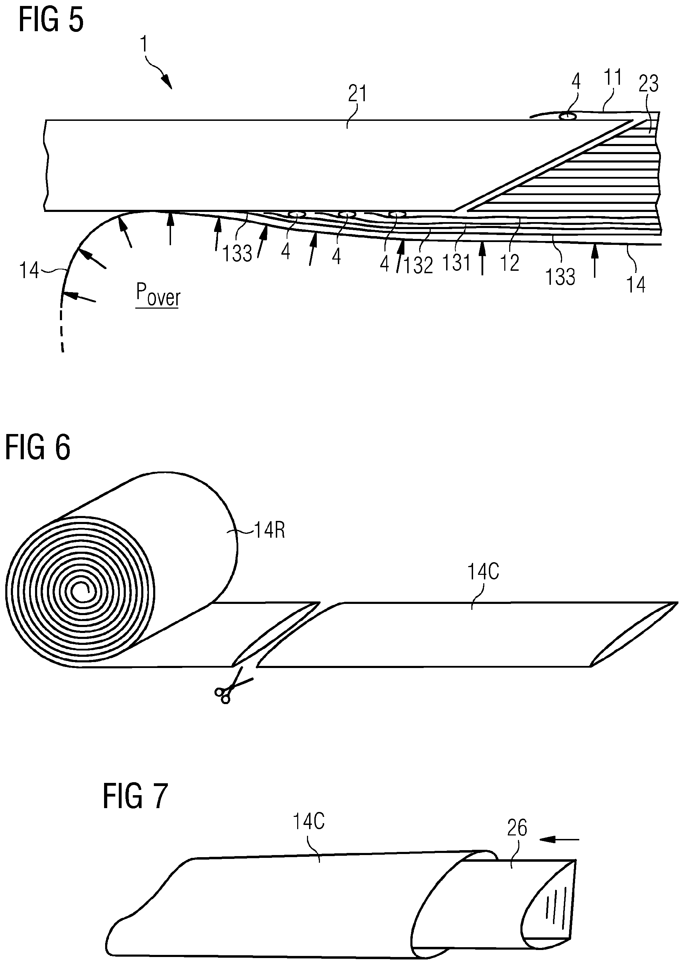

The principle of the invention is illustrated in Figure 5, which shows an enlarged view of the region near the outer edges of the bags 12, 131, 132, 133 in the rotor blade interior. Here, a single pressure bag 14 is shown in its inflated state. For clarity, the layers 12, 131, 132, 133 are shown some distance apart, but it shall be understood that the inflated pressure bag 14 acts to press all layers tightly against each other to act as a single, thicker layer. The slight overpressure (for example 100 mbar above ambient) in the pressure bag 14 acts on both sides of each butyl seal 4 and ensures that any resin in the infusion space would have to "work harder" to break through a butyl seal. The overpressure from the inflated pressure bag 14 is enough to hold in place any component such as a circumferential sieve hose, spill suction hose, foam labyrinth etc., which can be connected to an external vacuum pump via an overflow container.

A pressure bag 141, 142 can be prepared as shown in Figures 6 - 10, beginning with a roll 14R of layflat tubing, made from a suitable material such as heavy-gauge polythene, polypropylene, polyamide etc., or any combination of such materials. A suitable length of tubing is cut from the roll 14R as indicated. Figure 7 illustrates a subsequent step in which a mandrel 26 is inserted into a cut length 14C of tubing. Here, the mandrel 26 has a flat side face that corresponds to the vertical shear web which will be placed in the joint region, and a shaped part that matches the shape of the leading edge in the joint region. A similar assembly is prepared with a mandrel shaped to fit on the other side of the shear web, matching the trailing edge shape.

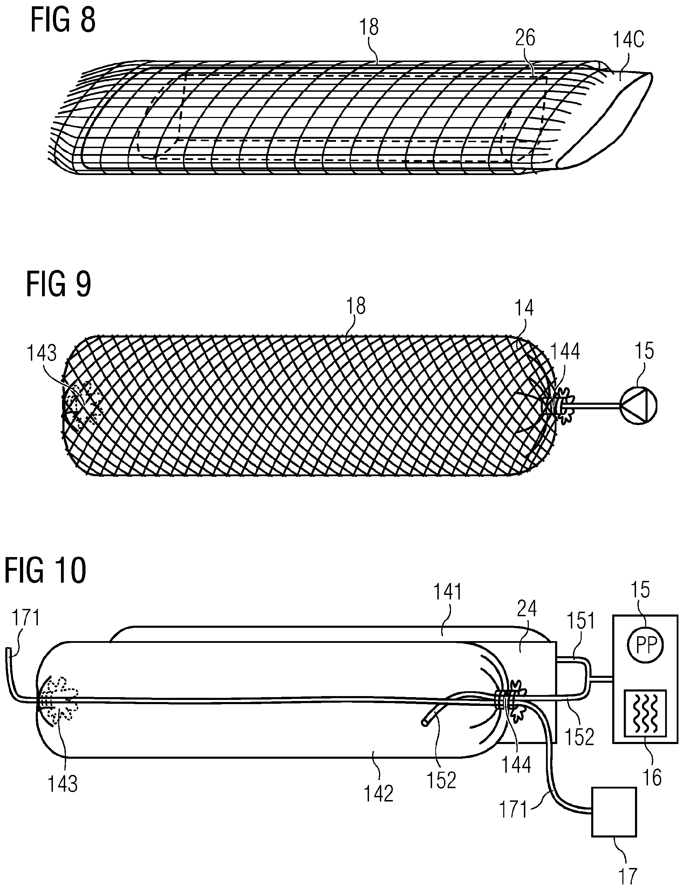

Radial expansion of a pressure bag is limited by the interior surfaces of the joint region. To protect a pressure bag from lengthwise over-inflation, a suitable structure such as a mesh sleeve 18 (for example a length of tubular industrial netting, cut to size) can be placed over a pressure bag 14 as indicated in Figure 8, showing a further step in which a mesh sleeve 18 is placed about the bagged mandrel prior to the step of inserting the bagged mandrel into the joint region. The mesh sleeve 18 will serve to contain spanwise expansion of the inflated pressure bag. The mesh sleeve 18 allows the pressure bag 14 to inflate to the desired overpressure by containing its lengthwise expansion and preventing overstretching of the elastic material of the pressure bag 14. The mesh sleeve 18 can be closed off at both ends in any suitable manner.

Once the mandrels have been placed in the tubing pieces 14C (and mesh sleeves), theses assemblies can be inserted into the joint region. In a preceding step, workers have attached the inner vacuum arrangement 12, 131, 132 to the inside faces of the precast sections 21, 22 using butyl seals, and have connected spill suction hoses to the inner vacuum arrangement 12, 131, 132.

Once the bagged mandrels have been put into place, the pressure bags 141, 142 are formed. To this end, the open ends of a cut piece 14C are bunched together to form an airtight seal 143, 144 at each end as indicated in Figure 9. Here, one seal 143 is formed in the interior of the tubing 14C to form the "outboard" end of a bag. The other "inboard" seal 144 is formed by bunching the other open end of the cut piece 14C to complete the bag 14. An airtight seal 143, 144 is preferably realised as a cold shrink seal. Prior to forming an airtight seal 143, 144, one or more hoses can be arranged as required. For example, an air inlet hose 151, 152 is arranged in the inboard seals 144 of the pressure bags 141, 142 for subsequent connection to an inflation assembly 15, for example a pressurized air supply 15 as indicated here. A number of spill suction hoses 171 can be arranged to extend through one or both pressure bags 141, 142 via the outboard seals 143 and the inboard seals 144, for subsequent connection to a vacuum pump 17 as indicated here. Later, during the inventive VAPRTM procedure, devices such as the inflation assembly 15, an air heater 16, the vacuum pump 17 etc. can be arranged in the accessible inboard end in the interior of the rotor blade.

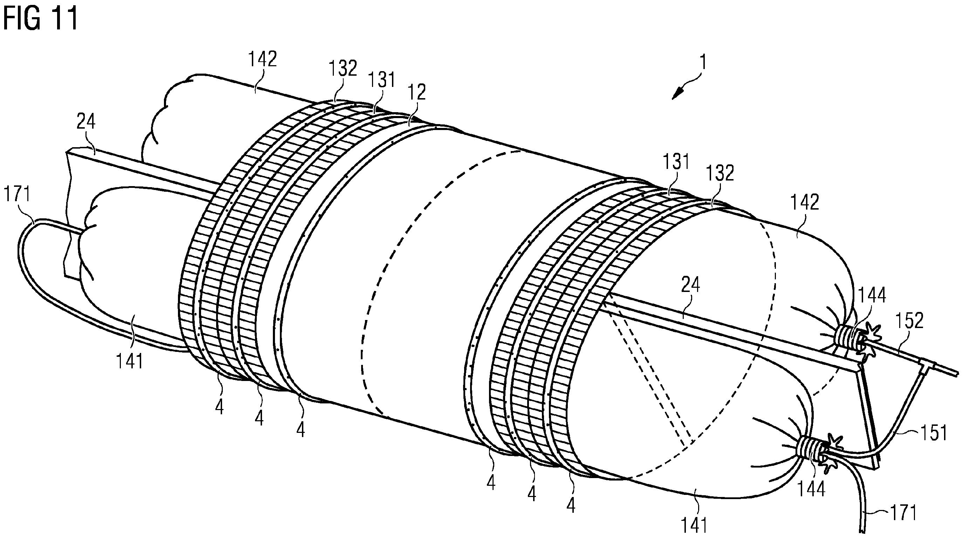

Figure 11 is a schematic representation of the arrangement of bags 12, 131, 132 and pressure bags 141, 142 relative to the joint (indicated as the dotted line extending about the inner bag 12 of the airfoil-shaped inner vacuum arrangement) between rotor blade sections. The diagram only shows components that are arranged in the rotor blade interior during the VARTM procedure: for clarity, the rotor blade sections 21, 22 and joint insert 23 are not shown, but it shall be understood that the layers 12, 131, 132 of the inner vacuum arrangement have been attached to the interior surfaces of the rotor blade sections 21, 22 on either side of the joint insert 23. Lengthwise expansion of the inflated pressure bags 141, 142 may be assumed to be limited as described above, either by choosing a suitable material for a pressure bag, or by placing a mesh sleeve about a pressure bag and tying off the ends of the mesh sleeve to define the maximum length of the inflated pressure bag.

The diagram shows the inner vacuum bag 12 secured to the inner surfaces of the rotor blade sections by a butyl seal 4 along each of its side edges; the first safety bag 131 which is wider than the inner vacuum bag 12 and which is also secured to the inner surfaces of the rotor blade sections by butyl seals 4 along each of its side edges; and the second safety bag 132 which is wider than the first safety bag 131 and which is also secured to the inner surfaces of the rotor blade sections by butyl seals 4 along each of its side edges.

The width of the inner vacuum bag 12 may be assumed to exceed the width of the relevant joint regions by a suitable margin, for example the inner vacuum bag 12 can be significantly wider than the insert 23 shown in the preceding drawings. The spanwise length of each pressure bag exceeds the spanwise extent of the inner vacuum arrangement.

The diagram also shows an exemplary spill suction hose 171 leading from a gap between layers 12, 131, 132, through a seal at the outboard end of a pressure bag 141 and another seal at the inboard end of the pressure bag 141 to a suction assembly 17.

The diagram also indicates the position of a shear web 24 extending through the rotor blade interior in the spanwise direction. This shear web 24 effectively divides the interior space into a leading-edge region and a trailing-edge region. To ensure that the overpressure of the inflated pressure bags 141, 142 is applied evenly against the inner vacuum arrangement, both pressure bags 141, 142 are inflated by a common air supply 15 using a hose arrangement 151, 152 as shown here.

After consolidation and curing of the joint, the pressure bags 141, 142 are deflated; devices 15, 16, 17 are disconnected, the inboard seals 144 are opened, the mandrels are pulled out of the rotor blade interior, the outboard seals 143 are opened, the pressure bags 141, 142 are removed, any spill suction hoses 171 and all layers of the inner vacuum arrangement 12, 132, 132, 133 are detached from the interior faces of the joint region. At the exterior of the rotor blade, the outer fixture 10 and outer vacuum bag 11 are removed.

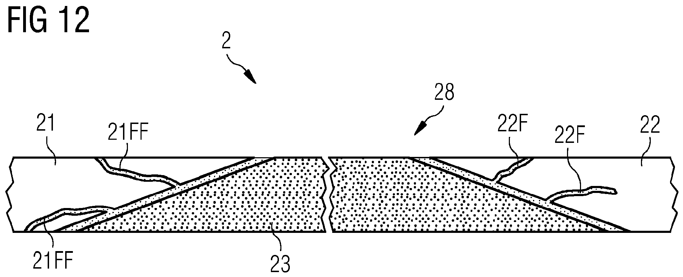

Figure 12 illustrates schematically the cured joint 28 between two precast rotor blade sections 21, 22 after joining using the inventive infusion assembly and VAPRTM method. The cured resin (indicted by the stippling pattern) has filled the infusion space, permeating the layers of the insert 23.

The resin has also been pushed into any tunnel pores, as indicated by the resin-filled pores 21F, 22F (again, these are shown greatly exaggerated) in the precast sections to fill or at least partially fill these spaces, thus effectively closing off any air leaks. In addition to facilitating the underpressure during the VARTM procedure, these resin-filled pores contribute to the strength of the cured joint 28 and the rotor blade 2.

Although the present invention has been disclosed in the form of preferred embodiments and variations thereon, it will be understood that numerous additional modifications and variations could be made thereto without departing from the scope of the invention. For example, a circular mattress or foam sleeve could be placed about a pressure bag to ensure even distribution of pressure when the pressure bag is inflated. Such a foam sleeve can also decrease the rate of temperature loss during the curing phase. The foam sleeve or mattress can be held in place by a structure such as the mesh sleeve described above.

For the sake of clarity, it is to be understood that the use of "a" or "an" throughout this application does not exclude a plurality, and "comprising" does not exclude other steps or elements.

## Claims

1. An infusion assembly (1) for forming a resin-infused joint between two hollow elongate precast sections (21, 22), comprising
- an outer vacuum arrangement comprising an outer vacuum bag (11) adapted to be attached to the exterior surfaces of the precast sections (21, 22);
- an inner vacuum arrangement comprising an inner vacuum bag (12) adapted to be attached to the interior surfaces of the precast sections (21, 22); and
- an overpressure arrangement comprising a pressurized air supply (15) and one or more inflatable bags (14, 141, 142) configured to exert an overpressure (Pₒᵥₑᵣ) against the inner vacuum bag (12) during a resin infusion procedure.

2. An infusion assembly according to the preceding claim, wherein the overpressure arrangement comprises a first inflatable bag (141) for placement on one side of a shear web (24) extending through the precast sections (21, 22), and a second inflatable bag (142) for placement on the other side of the shear web (24).

3. An infusion assembly according to any of the preceding claims, comprising an air inlet hose (151, 152) arranged between a pressurized air supply (15) and the interior of an inflatable bag (141, 142).

4. An infusion assembly according to any of the preceding claims, wherein the length of an inflatable bag (14, 141, 142) exceeds the spanwise width of the inner vacuum arrangement (12, 131, 132, 133).

5. An infusion assembly according to any of the preceding claims, comprising a mandrel (26) arranged in the interior of an inflatable bag (14, 141, 142).

6. An infusion assembly according to any of the preceding claims, comprising a containment means (18) arranged about an inflatable bag (14, 141, 142) to limit expansion of the inflatable bag (14, 141, 142) in a spanwise direction.

7. An infusion assembly according to any of the preceding claims, wherein an inflatable bag (14, 141, 142) is made from a length of layflat tubing.

8. An infusion assembly according to the preceding claim, wherein an inflatable bag (14, 141, 142) is formed by an airtight seal (143, 144) at each end of the length of layflat tubing.

9. An infusion assembly according to any of the preceding claims, wherein the inner vacuum arrangement further comprises at least one safety bag (131, 132) arranged to enclose the inner vacuum bag (12).

10. A method of connecting precast sections (21, 22) of a wind turbine rotor blade, which method comprises the steps of
- aligning the precast sections (21, 22) to meet at a joint;
- providing an infusion assembly (1) according to any of claims 1 to 9;
and subsequently
- attaching the outer vacuum bag (11) to the exterior surfaces of the precast sections (21, 22);
- attaching the inner vacuum bag (12) to the interior surfaces of the precast sections (21, 22);
- establishing a vacuum in the infusion space defined by the vacuum bags (11, 12); and
- deploying the overpressure arrangement to exert an overpressure (Pₒᵥₑᵣ) against the inner vacuum bag (12), while
- infusing resin into the infusion space defined by the vacuum bags (11, 12).

11. A method according to the preceding claim, comprising a preparatory step of forming an inflatable bag (14, 141, 142) from a length of tubing (14C) cut from a layflat tubing roll (14R) .

12. A method according to the preceding claim, comprising a step of forming an airtight seal (143) at each end of the cut length (14C).

13. A method according to the preceding claim, wherein the airtight seal (143) is formed as a cold-shrink seal.

14. A method according to any of the preceding method claims, comprising a preparatory step of arranging a spill suction hose (171) to extend from the interior of one precast section (22) through an inflatable bag (14, 141, 142) to the interior of the other precast section (21).

15. A wind turbine rotor blade (2) comprising at least
- a hollow elongate inboard precast section (21) with a bonding surface (210);
- a hollow elongate outboard precast section (22) with a bonding surface (220); and
- a joint between the precast sections (21, 22), which joint is formed in a resin infusion procedure performed by the infusion assembly according to any of claims 1 to 10;
**characterized in that** tunnel pores (21F, 22F) at the bonding surfaces (210, 220) of the precast sections (21, 22) are at least partially filled with resin.
